# EUROPÄISCHE PATENTANMELDUNG

(11) **EP 2 899 069 A1**
(43) Veröffentlichungstag der Anmeldung: **29.07.2015**
(21) Anmeldenummer: 15150876.9
(22) Anmeldetag: 13.01.2015
(51) Int. Cl.: B60Q 9/00

(54) **Fahrerkabine eines Fahrzeugs mit einer Anzeigeeinheit**

(30) Priorität: 22.01.2014 DE 102014100673
(71) Anmelder: SICK AG, 79183 Waldkirch (DE)
(72) Erfinder: Grabinger, Jörg, 79312 Emmendingen (DE); Silva, Jens, 79117 Freiburg (DE)
(74) Vertreter: Rieger, Daniel-Stephan

(57) **Zusammenfassung**

Fahrerkabine eines Fahrzeugs (2) mit einer Anzeigeeinheit (4) zur Signalisierung von Objekten (6) außerhalb des Fahrzeugs (2) mit wenigstens einem Sensor (8) zur Erfassung der Objekte (6), wobei die Anzeigeeinheit (4) durch Leuchtmittel (10) an den Innenseiten (12) der Holmen (14) der Fahrerkabine (1) gebildet ist, wobei der Sensor eine Stereokamera oder eine Entfernungsbildkamera ist.

## Beschreibung

Die vorliegende Erfindung betrifft eine Fahrerkabine eines Fahrzeugs mit einer Anzeigeeinheit gemäß dem Oberbegriff von Anspruch 1.

Die DE 10 2010 028 911 A1 offenbart einen Gabelstapler mit einer Umfeldsensorik, beispielsweise Laserscannern oder Videosystemen. Dabei kann bei einer Gefahr oder einer drohenden Kollision eine visuelle, eine akustische oder eine haptische Warnung des Fahrers erfolgen.

Die DE 10 2007 061 723 A1 offenbart ein Verfahren zum Anzeigen von Warnhinweisen in einem Kraftfahrzeug, wobei mehrere Anzeigeeinheiten angeordnet sind, die aus der Perspektive des Fahrzeuglenkers in verschiedenen Richtungen angeordnet sind.

Die DE 10 2011 121 392 A1 offenbart ein Fahrerassistenzsystem mit einem Anzeigemittel, welches in einem Cockpit eines Kraftfahrzeugs angeordnet ist.

Die US 2012/0153 671 A1 offenbart eine Anzeigeeinheit an den Holmen eines Nutzfahrzeugs.

Die DE 29 908 994 U1 offenbart eine Innenbeleuchtung von Fahrzeugen.

Eine Aufgabe der Erfindung besteht darin, einem Fahrer eines Fahrzeugs, insbesondere eines Gabelstaplers im Sichtbereich Informationen über die Umgebung mit einem Sensor, insbesondere Überwachungssensor bereitzustellen.

Die Aufgabe wird gemäß Anspruch 1 gelöst mit einer Fahrerkabine eines Fahrzeugs mit einer Anzeigeeinheit zur Signalisierung von Objekten außerhalb des Fahrzeugs mit wenigstens einem Sensor zur Erfassung der Objekte, wobei die Anzeigeeinheit durch Leuchtmittel an den Innenseiten der Holmen der Fahrerkabine gebildet ist, wobei der Sensor eine Stereokamera oder eine Entfernungsbildkamera ist.

Gemäß der Erfindung sind die Leuchtmittel der Anzeigeeinheit im Sichtbereich des Fahrzeugführers angeordnet. Dadurch kann der Fahrzeugführer direkt und unmittelbar eine Anzeige der Leuchtmittel wahrnehmen und ausgehend von der Anzeige des Leuchtmittels eine Aktion durchführen, beispielsweise das Fahrzeug abbremsen oder stoppen. Dabei kann der Fahrzeugführer weiter die Umgebung des Fahrzeugs beobachten und braucht den Blick beispielsweise nicht auf ein Armaturenbrett richten, da die Leuchtmittel direkt an den Holmen positioniert sind und daher direkt im Sichtbereich oder Blickbereich des Fahrzeugführers angeordnet sind.

Die Erfindung hat weiter den Vorteil, dass die Leuchtmittel einfach an den bestehenden Holmen des Fahrzeugs montierbar sind. Daher braucht das Armaturenbrett des Fahrzeugs nicht modifiziert werden. Daher kann ein Fahrzeug nachträglich einfach mit den Leuchtmitteln ausgerüstet werden.

Gemäß einer besonderen Ausführungsform weisen die Leuchtmittel verschiedene Farben zur Signalisierung auf, insbesondere die Farben Gelb und Rot. Die Farbe Gelb signalisiert einen Warnhinweis für den Fahrzeugführer, beispielsweise dass sich Objekte in der Nähe des Fahrzeugs befinden, jedoch nicht unmittelbar eine Kollision mit den Objekten vorhersehbar ist. Der Fahrzeugführer wird durch die Farbe Gelb aufgefordert, das Fahrzeug abzubremsen oder zu verlangsamen, um eine ggf. drohende Kollision zu vermeiden. Die Farbe Rot signalisiert einen gefährlichen Zustand, beispielsweise eine vorhersehbare drohende Kollision mit einem Gegenstand, so dass der Fahrzeugführer aufgrund der Farbe Rot aufgefordert wird, das Fahrzeug unverzüglich zu stoppen. Werden durch den Sensor keine Objekte im Umgebungsbereich registriert, oder sind die Objekte zumindest außerhalb eines bestimmten Warnbereichs, so erfolgt durch die Leuchtmittel entweder gar keine farbliche Anzeige, oder die Leuchtmittel signalisieren durch die Farbe Grün einen ungefährlichen Zustand.

In Weiterbildung der Erfindung wird nur das Leuchtmittel eines Holmens angesteuert, an dessen Seite oder Ecke das Objekt detektiert wird. Dadurch ist für den Fahrzeugführer durch das Leuchtmittel erkennbar, an welcher Seite oder Ecke des Fahrzeugs sich ein Objekt befindet. Gemäß der Erfindung werden durch das Leuchtmittel dem Fahrzeugführer zwei unabhängige Informationen mitgeteilt, nämlich erstens, ob ein Hindernis in der Nähe des Fahrzeugs vorhanden ist und zum zweiten, an welcher Stelle in Bezug auf das Fahrzeug das Objekt vorhanden ist. Gemäß dieser Weiterbildung der Erfindung kann der Fahrzeugführer seine Aufmerksamkeit direkt auf die Stelle außerhalb des Fahrzeugs lenken, an der das Objekt von den Leuchtmitteln angezeigt wird.

Gemäß einer bevorzugten Ausführung der Erfindung ist die Fahrerkabine an einem Gabelstapler, Nutzfahrzeug oder Baustellenfahrzeug vorgesehen. Gerade Gabelstapler, Nutzfahrzeuge oder Baustellenfahrzeuge werden in Umgebungen bewegt, bei denen häufig Objekte, wie beispielsweise Lagergut, Steine oder Personen im Umgebungsbereich vorhanden sind und auf die der Fahrzeugführer besondere Aufmerksamkeit richten muss.

Gemäß der Erfindung handelt es sich bei dem Sensor um eine Stereokamera oder eine Entfernungsbildkamera.

In Weiterbildung der Erfindung handelt es sich bei dem Sensor um eine Videokamera oder einen Laserscanner.

Die Sensoren sind optional an eine Auswerte- und Steuereinheit angeschlossen. Die Sensordaten werden dabei von der Auswerte- und Steuereinheit ausgewertet. Die Leuchtmittel sind ebenfalls optional mit der Auswerte- und Steuereinheit verbunden. Die Leuchtmittel werden von der Auswerte- und Steuereinheit angesteuert. Die Auswerte- und Steuereinheit kann separat ausgebildet sein. Jedoch kann die Auswerteund Steuereinheit auch in dem Sensor oder in dem Leuchtmittel integriert sein.

Eine Videokamera zur Erfassung der Objekte hat den Vorteil, dass ein sehr großer Sichtbereich abgedeckt werden kann. Der Videokamera ist die Auswerte- und Steuereinheit nachgeordnet, um die Objekte in den Videobildern zu extrahieren. Bei der Videokamera kann es sich um eine Schwarz/Weiß Kamera oder auch um eine Farbkamera handeln.

Eine Stereokamera hat den Vorteil, dass zusätzlich zur Information, ob ein Objekt vorhanden ist oder nicht, auch Entfernungsinformationen über das Objekt vorliegen. Durch die Entfernungsinformationen ist die Auswerte- und Steuereinheit in der Lage, die Leuchtmittel erst ab einer bestimmten unterschrittenen Entfernung des Objektes zum Fahrzeug anzusteuern, nämlich wenn die Objekte in einen kritischen Kollisionsbereich des Fahrzeuges kommen könnten.

Gemäß der Erfindung kann auch eine Entfernungskamera eingesetzt werden, welche die Entfernungsinformationen aufgrund der Lichtlaufzeit ermittelt.

Gemäß der Erfindung kann auch ein Laserscanner eingesetzt werden. Ein Laserscanner sendet zyklisch Lichtimpulse aus. Diese Lichtimpulse werden über eine Umlenkeinheit in einem Flächenbereich oder einem Raumbereich ausgesendet. Durch die Auswerte- und Steuereinheit des Laserscanners wird die Lichtlaufzeit des Lichtimpulses ausgewertet, um die Entfernung des Objektes zu ermitteln.

Gemäß der Erfindung können auch andere geeignete Sensoren, wie beispielsweise Näherungssensoren, Ultraschallsensoren oder Lichttaster eingesetzt werden.

In Weiterbildung der Erfindung ist der Sensor zur Überwachung der Rückseite des Fahrzeugs angeordnet. Hierzu ist der Sensor beispielsweise direkt an der Rückseite des Fahrzeugs oder beispielsweise auf dem Dach des Fahrzeugs zur Beobachtung der Rückseite des Fahrzeugs angeordnet.

In einer besonderen Ausführungsform der Erfindung ist das Leuchtmittel ein selbstklebender Leuchtstreifen. Durch die Ausbildung des Leuchtmittels als selbstklebender Leuchtstreifen ist das Leuchtmittel besonders einfach montierbar und ggf. an Fahrzeugen nachrüstbar.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: eine Fahrerkabine eines Fahrzeugs mit einer Anzeigeeinheit;
- Figur 2: eine schematische Darstellung eines Fahrzeugs.

In den nachfolgenden Figuren sind identische Teile mit identischen Bezugszeichen versehen.

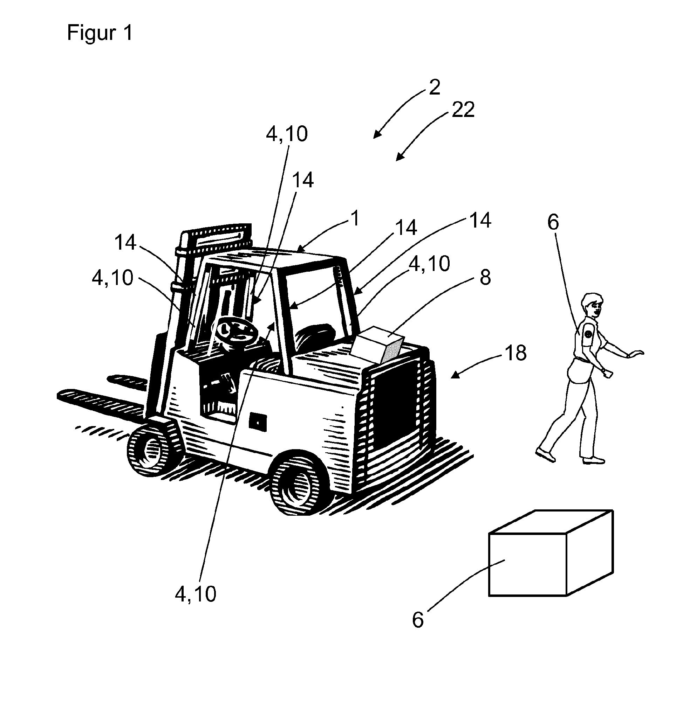

Figur 1 zeigt eine Fahrerkabine 1 eines Fahrzeugs 2 mit einer Anzeigeeinheit 4 zur Signalisierung von Objekten 6 außerhalb des Fahrzeugs 2 mit wenigstens einem Sensor 8 zur Erfassung der Objekte 6, wobei die Anzeigeeinheit 4 durch Leuchtmittel 10 an den Innenseiten der Holmen 14 der Fahrerkabine 1 gebildet ist.

In Figur 1 ist das Fahrzeug 2 ein Gabelstapler 22. Der Gabelstapler 22 weist dabei die Fahrerkabine 1 mit vier Holmen 14 auf. Die Holmen 14 sind Teil der Karosserie und verbinden die vier Eckpunkte des Daches des Fahrzeugs 2 bzw. Gabelstaplers 22 mit dem Fahrzeugaufbau. Zwischen den Holmen 14 sind üblicherweise an der Vorderseite und Rückseite 18 des Fahrzeugs 2 Scheiben eingesetzt zum Schutz des Fahrzeugführers. An den Seiten des Fahrzeugs 2 zwischen den Holmen 14 sind entweder Türen oder einfach nur Öffnungen vorgesehen, um einen Aus- und Einstieg des Fahrzeugführers zu ermöglichen. Die Holmen 14 des Fahrzeuges 2 liegen im direkten Sichtbereich des Fahrzeugführers während der Fahrt des Fahrzeugs 2.

Der Sensor 8 ist gemäß Figur 1 beispielsweise an der Rückseite 18 des Gabelstaplers 22 angeordnet. Mit dem Sensor 8 wird gemäß Figur 1 die Rückseite 18 des Gabelstaplers überwacht. Mit dem Sensor 8 werden die Objekte 6 detektiert. Eines der Objekte 6 ist eine Kiste und das andere Objekt 6 ist eine Person.

Jedoch ist es gemäß der Erfindung auch vorgesehen, dass Sensoren 8 an der Frontseite oder an den Seiten des Fahrzeugs 2 angeordnet sind. Weiter können die Sensoren 8 auch in oder an den Ecken des Fahrzeuges 2 angeordnet sein. Der Sensor 8 kann auch in verschiedenen Höhen an dem Fahrzeug 2 angeordnet sein. Beispielsweise kann der Sensor 8 in der Höhe einer Stoßstange oder in der Höhe des Daches angeordnet sein. Es können auch mehrere Sensoren 8 in verschiedenen Höhen an dem Fahrzeug 2 angebracht sein.

Der Sensor 8 ist eine Videokamera, eine Stereokamera, eine Entfernungsbildkamera oder ein Laserscanner.

Da sich die Objekte 6 in der Nähe des Fahrzeuges 2 befinden, werden die Objekte 6 von dem Sensor 8 erfasst. Mit Hilfe einer Auswerte- und Steuereinheit wird die Sensorinformation ausgewertet und die Leuchtmittel 10 an den hinteren beiden Holmen 14 angesteuert. Es können jedoch alternativ auch alle vier Leuchtmittel 10 der vier Holmen 14 gleichzeitig angesteuert werden. Dabei signalisieren die Leuchtmittel 10 mit der Farbe Gelb, dass Objekte 6 in der Umgebung des Fahrzeugs 2 vorhanden sind und signalisieren dem Fahrzeugführer, dass bei einer Rückwärtsfahrt eine Kollision drohen könnte. Würde der Fahrzeugführer den Gabelstapler 22 rückwärts in Richtung der Kiste lenken, werden ab einer bestimmten Mindestdistanz die Leuchtmittel 10 von der Auswerte- und Steuereinheit angesteuert und die Farbe Rot angezeigt, so dass dem Fahrzeugführer signalisiert wird, dass eine unmittelbare Kollision mit dem Objekt 6, also mit der Kiste erfolgen wird. Dabei können entweder alle vier Leuchtmittel 10 der vier Holme 14 angesteuert werden, oder auch nur das Leuchtmittel 10 des rückwärtigen Holmes 14, der in Richtung der Kiste zeigt. Das Leuchtmittel 10 ist optional ein selbstklebender Leuchtstreifen.

Neben der dargestellten Fahrerkabine 1 eines Gabelstaplers 22 kann es sich bei dem Fahrzeug 2 auch um ein anderes Nutzfahrzeug oder ein Baustellenfahrzeug handeln.

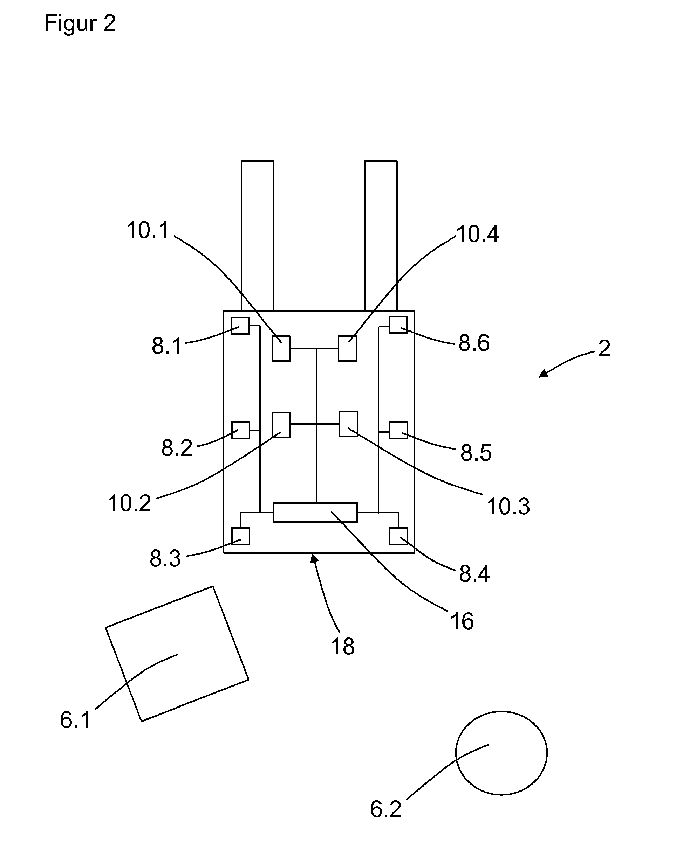

Figur 2 zeigt ein ähnliches Fahrzeug 2 wie Figur 1 in einer schematischen Darstellung. Gemäß Figur 2 ist an den Ecken jeweils ein Sensor 8.1, 8.3, 8.4, 8.6 angeordnet. Zusätzlich sind an zwei Seiten des Fahrzeugs 2 noch zwei Sensoren 8.2, 8.5 angeordnet. Die Sensoren 8.1, 8.2, 8.3, 8.4, 8.5, 8.6 sind zur Überwachung der Umgebung rund um das Fahrzeug 2 angeordnet. Die Sensoren 8.1, 8.2, 8.3, 8.4, 8.5, 8.6 sind an eine Auswerte- und Steuereinheit 16 angeschlossen. Die Sensordaten werden dabei von der Auswerte- und Steuereinheit 16 ausgewertet. Weiter sind die Leuchtmittel 10.1, 10.2, 10.3, 10.4 jeweils an nicht dargestellten Holmen angeordnet. Die Leuchtmittel 10.1, 10.2, 10.3, 10.4 sind ebenfalls mit der Auswerte- und Steuereinheit 16 verbunden. Die Leuchtmittel 10 werden von der Auswerte- und Steuereinheit 16 angesteuert. Die Auswerte- und Steuereinheit 16 kann separat ausgebildet sein. Jedoch kann die Auswerte- und Steuereinheit 16 auch in dem Sensor 8.1, 8.2, 8.3, 8.4, 8.5, 8.6 oder in dem Leuchtmittel 10.1, 10.2, 10.3, 10.4 integriert sein. Hinter dem Fahrzeug 2 befinden sich die Objekte 6.1 und 6.2. Dabei wird das Objekt 6.1 von dem Sensor 8.3 erfasst und das Objekt 6.2 wird von dem Sensor 8.4 erfasst. Das Objekt 6.2 weist eine genügend große Entfernung zum Fahrzeug 2 auf, so dass aufgrund der von der Auswerteund Steuereinheit 16 ausgewerteten Entfernung das Leuchtmittel 10.3 angesteuert wird und die Farbe Gelb zur Warnung angezeigt wird. Das Objekt 6.1 befindet sich jedoch zu nah an dem Fahrzeug 2, so dass die Auswerte- und Steuereinheit 16 aufgrund der ausgewerteten Entfernung zwischen Objekt 6.1 und dem Fahrzeug 2 das Leuchtmittel 10.2 ansteuert und die Farbe Rot zur Kollisionswarnung anzeigt. Beispielsweise kann das Leuchtmittel 10.3 die Farbe Rot auch in einem Blinkmodus anzeigen. Weiter kann es auch vorgesehen sein, dass die übrigen Leuchtmittel 10.1, 10.3, 10.4 auch die Farbe Rot anzeigen, um dem Fahrzeugführer in allen Richtungen die Kollisionswarnung anzuzeigen.

### Bezugszeichen:

- 1: Fahrerkabine
- 2: Fahrzeug
- 4: Anzeigeeinheit
- 6, 6.1, 6.2: Objekt
- 8, 8.1, 8.2, 8.3, 8.4, 8.5, 8.6: Sensor
- 10, 10.1, 10.2, 10.3, 10.4: Leuchtmittel
- 14: Holmen
- 16: Auswerte- und Steuereinheit
- 18: Rückseite
- 20: Leuchtstreifen
- 22: Gabelstapler

## Patentansprüche

1. Fahrerkabine eines Fahrzeugs (2) mit einer Anzeigeeinheit (4) zur Signalisierung von Objekten (6) außerhalb des Fahrzeugs (2) mit wenigstens einem Sensor (8) zur Erfassung der Objekte (6),
wobei die Anzeigeeinheit (4) durch Leuchtmittel (10) an den Innenseiten der Holmen (14) der Fahrerkabine (1) gebildet ist, **dadurch gekennzeichnet, dass** der Sensor eine Stereokamera oder eine Entfernungsbildkamera ist.

2. Fahrerkabine nach Anspruch 1, **dadurch gekennzeichnet, dass** die Leuchtmittel (10) verschiedene Farben zur Signalisierung aufweisen, insbesondere die Farben Gelb und Rot.

3. Fahrerkabine nach einem der vorhergehenden Ansprüche, **dadurch gekennzeichnet, dass** nur das Leuchtmittel (10) eines Holmens (14) angesteuert wird, an dessen Seite oder Ecke das Objekt (6) detektiert wird.

4. Fahrerkabine nach einem der vorhergehenden Ansprüche, **dadurch gekennzeichnet, dass** die Fahrerkabine (1) an einem Gabelstapler (22), Nutzfahrzeug oder Baustellenfahrzeug vorgesehen ist.

5. Fahrerkabine nach einem der vorhergehenden Ansprüche, **dadurch gekennzeichnet, dass** der Sensor (8) zur Überwachung der Rückseite des Fahrzeugs (2) angeordnet ist.

6. Fahrerkabine nach einem der vorhergehenden Ansprüche, **dadurch gekennzeichnet, dass** das Leuchtmittel (10) ein selbstklebender Leuchtstreifen (20) ist.
